(19) Europäisches Patentamt
European Patent Office
Office européen des brevets

(11) **EP 1 695 043 B1**

(12) **EUROPÄISCHE PATENTSCHRIFT**

(45) Veröffentlichungstag und Bekanntmachung des Hinweises auf die Patenterteilung:
**27.07.2016 Patentblatt 2016/30**

(21) Anmeldenummer: **04804820.1**

(22) Anmeldetag: **14.12.2004**

(51) Int Cl.:
*G01F 23/284* (2006.01)    *G01F 23/296* (2006.01)

(86) Internationale Anmeldenummer:
**PCT/EP2004/053462**

(87) Internationale Veröffentlichungsnummer:
**WO 2005/062001 (07.07.2005 Gazette 2005/27)**

(54) **VERFAHREN ZUR FÜLLSTANDSMESSUNG NACH DEM LAUFZEITPRINZIP**

FILLING LEVEL MEASUREMENT METHOD ACCORDING TO THE RUNNING TIME PRINCIPLE

PROCEDE DE MESURE D'UN NIVEAU DE REMPLISSAGE D'APRES LE PRINCIPE DE PROPAGATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.12.2003 DE 10360710**

(43) Veröffentlichungstag der Anmeldung:
**30.08.2006 Patentblatt 2006/35**

(73) Patentinhaber: **Endress + Hauser GmbH + Co. KG**
**79689 Maulburg (DE)**

(72) Erfinder:
• **SPANKE, Dietmar**
**79585 Steinen (DE)**
• **BARET, Marc**
**F-68680 Kembs (FR)**

• **SCHMITT, Edgar**
**77948 Friesenheim (DE)**
• **JIN, Yong**
**79539 Lörrach (DE)**

(74) Vertreter: **Hahn, Christian et al**
**Endress + Hauser**
**(Deutschland)AG +Co. KG**
**PatServe**
**Colmarer Strasse 6**
**79576 Weil am Rhein (DE)**

(56) Entgegenhaltungen:
**DE-A1- 4 234 300     DE-A1- 19 544 071**
**US-A- 5 587 969     US-B1- 6 536 275**

**Beschreibung**

Die Erfindung betrifft ein Verfahren zur Füllstandsmessung nach dem Laufzeitprinzip mit berührungslos arbeitenden Füllstandsmeßgeräten.

Derartige berührungslos arbeitende Meßgeräte werden in einer Vielzahl von Industriezweigen eingesetzt, z.B. in der verarbeitenden Industrie, in der Chemie oder in der Lebensmittelindustrie.

Bei der Füllstandsmessung werden periodisch kurze Sendesignale, z.B. Mikrowellen oder Ultraschallwellen, mittels eines Sende- und Empfangselementes zur Oberfläche eines Füllguts gesendet und deren an der Oberfläche reflektierte Echosignale nach einer abstandsabhängigen Laufzeit wieder empfangen. Es wird eine die Echoamplituden als Funktion der Laufzeit darstellende Echofunktion gebildet. Jeder Wert dieser Echofunktion entspricht der Amplitude eines in einem bestimmten Abstand von der Antenne reflektierten Echos.

Aus der Echofunktion wird ein Nutzecho bestimmt, das wahrscheinlich der Reflexion eines Sendesignals an der Füllgutoberfläche entspricht. Dabei wird in der Regel angenommen, daß das Nutzecho, eine größere Amplitude aufweist, als die übrigen Echos. Aus der Laufzeit des Nutzechos ergibt sich bei einer bekannten Ausbreitungsgeschwindigkeit der Sendesignale unmittelbar der Abstand zwischen der Füllgutoberfläche und der Antenne.

Üblicherweise wird nicht ein empfangenes Rohsignal zur Auswertung herangezogen, sondern dessen sogenannte Hüllkurve. Die Hüllkurve wird erzeugt, indem das Rohsignal gleichgerichtet und gefiltert wird. Zur genauen Bestimmung einer Laufzeit des Nutzechos wird zuerst ein Maximum der Hüllkurve bestimmt.

Diese herkömmliche Vorgehensweise funktioniert in einer Vielzahl von Anwendungen einwandfrei. Probleme treten jedoch immer dann auf, wenn das vom Füllstand stammende Echo nicht zweifelsfrei identifiziert werden kann. Dies kann beispielsweise der Fall sein, wenn Einbauten im Behälter vorhanden sind, die die Sendesignale besser Reflektieren, als die Füllgutoberfläche.

In solchen Fällen kann, z.B. bei der Inbetriebnahme, dem Füllstandsmeßgerät einmal der aktuelle Füllstand vorgegeben werden. Das Füllstandsmeßgerät kann anhand des vorgegebenen Füllstandes das zugehörige Echo als Nutzecho identifizieren und z.B. durch einen geeigneten Algorithmus verfolgen. Dabei werden z.B. in jedem Meßzyklus Maxima des Echosignals oder der Echofunktion bestimmt und aufgrund der Kenntnis des im vorangegangenen Meßzyklus ermittelten Füllstandes und einer anwendungs-spezifischen maximal zu erwartenden Änderungsgeschwindigkeit des Füllstandes das Nutzecho ermittelt. Aus einer Laufzeit des so ermittelten aktuellen Nutzechos ergibt sich dann der neue Füllstand.

Ausgehend von der Lage des Nutzechos im vorangegangenen Meßzyklus wird ein Zeitfenster bestimmt, indem sich das Nutzecho des aktuellen Meßzykluses befinden muß. Das aktuelle Nutzecho kann jedoch nur dann in diesem Zeitfenster gefunden werden, wenn das Nutzecho des vorangegangenen Meßzykluses bestimmt werden konnte und im aktuellen Meßzyklus ein dem aktuellen Nutzecho entsprechendes Maximum gefunden werden kann.

Die Laufzeit des Maximums des Nutzechos ist jedoch eine Echoeigenschaft, die nicht immer bestimmt werden kann. Befindet sich der Füllstand beispielsweise in der Nähe eines fest eingebauten Störers, z.B. einer Halterung im Inneren des Behälters, so überlagern sich die Echos von dem Störer und dem Füllgut. Eine Identifizierung des Nutzechos ist dann nicht immer möglich. Ähnliche Probleme treten auf, wenn nur sporadisch in den Signalweg ragende Elemente, wie z.B. Rührer, plötzlich in der Nähe der Füllgutoberfläche im Signalweg auftauchen und die Sendesignale reflektieren, oder wenn sich die Reflektionseigenschaften des Fülguts, z.B. durch Schaumbildung auf der Oberfläche, verändern.

Es ist eine Aufgabe der Erfindung, ein Verfahren zur Messung eines Füllstandes eines Füllgutes in einem Behälter mit einem nach dem Laufzeitprinzip arbeitenden Füllstandsmeßgerät anzugeben, das zuverlässig arbeitet.

Dies erreicht die Erfindung durch ein Verfahren zur Messung eines Füllstandes eines Füllgutes in einem Behälter, mit einem nach dem Laufzeitprinzip arbeitenden Füllstandsmeßgerät, bei dem

- periodisch Sendesignale in Richtung des Füllgutes gesendet werden,
- deren Echosignale aufgenommen und in eine Echofunktion umgewandelt werden,
- mindestens eine Echoeigenschaft der Echofunktion bestimmt wird, und
- anhand der Echoeigenschaften mindestens einer vorherigen Messung eine Vorhersage für die bei der aktuellen Messung zu erwartenden Echoeigenschaften abgeleitet wird,

Die Laufzelt des Maximums des Nutzechos ist jedoch eine Echoeigenschaft, die nicht immer bestimmt werden kann. Befindet sich der Füllstand beispielsweise in der Nähe eines fest eingebauten Störers, z.B. einer Halterung im Inneren des Behälters, so überlagern sich die Echos von dem Störer und dem Füllgut. Eine Identifizierung des Nutzechos ist dann nicht immer möglich. Ähnliche Probleme treten auf, wenn nur sporadisch in den Signalweg ragende Elemente, wie z.B. Rührer, plötzlich in der Nähe der Füllgutoberfläche im Signalweg auftauchen und die Sendesignale reflektieren, oder wenn sich die Reflektionseigenschaften des Füllguts, z.B. durch Schaumbildung auf der Oberfläche, verändern.

In der US 5,587, 969 A ist ein Verfahren zur Messung eines zeitlich veränderlichen Füllstandes eines Füllgutes in einem Behälter, mit einem nach dem Laufzeitprinzip arbeitenden Füllstandsmessgerät beschrieben, bei dem periodisch Sendesignale in Richtung des Füllgutes gesendet werden, deren Echosignale aufgenommen und in eine deren Amplituden in Abhängigkeit von deren Laufzeit wiedergebende Echofunktion umgewandelt werden. Dabei werden zeitlich aufeinander folgende Messungen ausgeführt, bei denen anhand der aktuellen Echofunktion Laufzeiten von durch Maxima der Echofunktion gebildeten Nutzechos bestimmt werden und der Füllstand anhand der Laufzeit desjenigen Nutzechos bestimmt wird, das die größte Laufzeit aufweist. Die Nutzechos werden anhand von Nutzecho-Wahrscheinlichkeiten ermittelt, die umso größer sind, je geringer die Wahrscheinlichkeit ist, dass es sich bei dem jeweiligen Echo um ein auf Mehrfachreflektionen zurück zu führendes Mehrfacheecho handelt

Zusätzlich sind in der US 5,587, 969 A Plausibilitätsprüfungen beschrieben, mit denen nachträglich überprüft werden kann, ob Echos der aktuellen Echofunktion im Vergleich zu korrespondierenden Echos vorheriger Messungen plausibel erscheinen. Dabei ergibt sich eine umso höhere Plausibilität, je geringer die Differenzen der Laufzeiten der korrespondierenden Echos in Relation zu einem anhand einer maximalen Füllstandsänderungsgeschwindigkeit und der Messrate bestimmten Vergleichswert sind. Diese Plausibitätsprüfungen ergeben eine besonders hohe Plausibilität, wenn die Differenzen der Laufzeiten der verglichenen Echos gering sind. Die Differenzen sind jedoch auch bei fehlerfreier Messung umso größer, je schneller sich der Füllstand zwischen den zugehörigen Messungen verändert. Entsprechend lassen diese Prüfungen die Messungen umso weniger plausibel erscheinen, je schneller sich der Füllstand zwischen den Messungen ändert. Das Ist jedoch im Ergebnis wenig zufriedenstellend, wenn sich der Füllstand tatsächlich zeitlich vergleichsweise schnell ändert.

Es ist eine Aufgabe der Erfindung, ein Verfahren zur Messung eines Füllstandes eines Füllgutes in einem Behälter mit einem nach dem Laufzeitprinzip arbeitenden Füllstandsmeßgerät anzugeben, das zuverlässig arbeitet.

Dies erreicht die Erfindung durch ein Verfahren gemäß Anspruch 1.

Erfindungsgemäß sind die Echoeigenschaften Laufzeiten von Maxima der Echofunktion, und den Maxima kann ein bekannter Reflektor im Inneren des Behälters, insb. eine Füllgutoberfläche, ein Boden des Behälters oder ein fest eingebauter Störer, zugeordnet werden.

Erfindungsgemäß wird anhand der Laufzeit mindestens eines Maximums einer vorangegangenen Messung eine Vorhersage für die bei der aktuellen Messung zu erwartende Laufzeit des entsprechenden Maximums getroffen.

Erfindungsgemäß wird die Vorhersage für die Laufzeit der Maxima ermittelt, indem anhand der letzten beiden vorangegangen Messungen eine momentane Änderunsgeschwindigkeit der Laufzeit berechnet und die zu erwartende Laufzeit anhand dieser Geschwindigkeit extrapoliert wird.

Gemäß einer weiteren Ausgestaltung des Verfahrens wird die Vorhersage für die Laufzeit der Maxima ermittelt, indem anhand von mindestens drei vorangegangen Messungen eine momentane Beschleunigung und eine momentane Änderungsgeschwindigkeit der Laufzeit berechnet und die zu erwartende Laufzeit anhand der Beschleunigung und der Geschwindigkeit extrapoliert wird.

Gemäß einer Weiterbildung des Verfahrens ist eine Echoeigenschaft die Laufzeit des an der Füllgutoberfläche reflektierten Nutzechos. Es wird anhand mindestens einer vorangegangenen Messung die bei der aktuellen Messung zu erwartende Laufzeit des an der Füllgutoberfläche reflektierten Nutzechos bestimmt und dasjenige Maximum der aktuellen Echofunktion bestimmt wird, dessen Laufzeit die geringste Abweichung zu der vorhergesagten Laufzeit des an der Füllgutoberfläche reflektierten Nutzechos aufweist. Anhand der Laufzeit dieses Maximum wird der aktuelle Füllstand bestimmt.

Gemäß einer Weiterbildung des Verfahrens ist eine Echoeigenschaft die Laufzeit des am Boden des Behälters reflektierten Echos. Es wird anhand mindestens einer vorangegangenen Messung die bei der aktuellen Messung zu erwartende Laufzeit des am Boden des Behälters reflektierten Echos bestimmt und dasjenige Maximum der aktuellen Echofunktion bestimmt, dessen Laufzeit die geringste Abweichung zu der vorhergesagten Laufzeit des am Boden des Behälters reflektierten Echos aufweist. Unter Einbeziehung der Laufzeit dieses Maximum wird der aktuelle Füllstand bestimmt.

Gemäß einer Weiterbildung der letztgenannten Weiterbildung des Verfahrens wird aus der Laufzeit des aktuellen am Boden reflektierten Echos ein Schätzwert für die Laufzeit des aktuellen Nutzechos berechnet. Es wird dasjenige Maximum der aktuellen Echofunktion bestimmt, dessen Laufzeit die geringste Abweichung zu dem Schätzwert aufweist, und anhand der Laufzeit dieses Maximum der aktuelle Füllstand bestimmt.

Gemäß einer weiteren Weiterbildung werden die Meßergebnisse fortlaufend auf deren Plausibilität hin überprüft.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.

Fig. 1 zeigt:     eine Anordnung zur Füllstandsmessung mit einem nach dem Laufzeitprinzip arbeitenden Füllstandsmeßgerät;

Fig. 2 zeigt:     ein Beispiel für eine mit der in Fig. 1 dargestellten Anordnung aufgenommenen Echofunktion; und

Fig. 3 zeigt:     ein Beispiel für eine zeitliche Abfolge von Echofunktionen, die auftritt, wenn sich ein anfänglich voller Behälter stetig entleert.

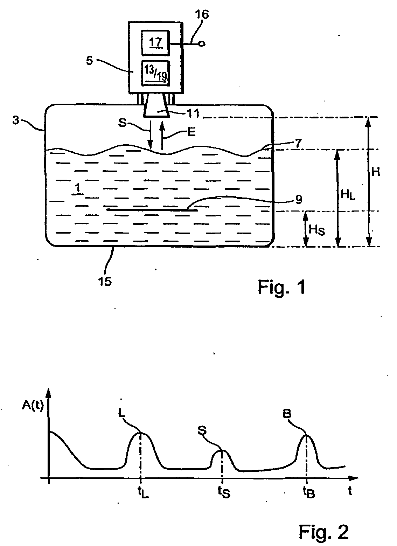

Fig. 1 zeigt eine Anordung zur Füllstandsmessung. Es ist ein mit einem Füllgut 1 gefüllter Behälter 3 dargestellt. Auf dem Behälter 3 ist ein nach dem Laufzeitprinzip arbeitendes Füllstandsmeßgerät 5 angeordnet. Als Füllstandsmeßgerät 5 eignet sich z.B. ein mit Mikrowellen arbeitendes Füllstandsmeßgerät oder ein mit Ultraschall arbeitendes Füllstandsmeßgerät. Das Füllstandsmeßgerät 5 dient dazu, einen Füllstand 7 des Füllguts 1 im Behälter zu messen. In dem Behälter 3 ist exemplarisch ein Störer 9 eingezeichnet. Störer 9 sind z.B. feste Einbauten im Behälter 3 an der Reflektionen auftreten können. Das hier nur ein einziger Störer 9 vorgesehen ist, dient dem leichteren Verständnis und der Übersichtlichkeit. Selbstverständlich können in realen Meßsituationen sehr viel mehr Störer vorhanden sein.

Das Füllstandsmeßgerät 5 weist mindestens ein Sende- und Empfangelement 11 zum Senden von Sendesignalen S und zum Empfangen von Echosignalen E auf. In dem dargestellten Ausführungsbeispiel ist ein mit Mikrowellen arbeitendes Füllstandsmeßgerät dargestellt, das als Sende- und Empfangelement 11 eine einzige Antenne 11 aufweist, die sowohl sendet als auch empfängt. Alternativ können aber auch eine Antenne zum Senden und mindestens eine weitere Antenne zum Empfangen vorgesehen sein. Bei einem mit Ultraschall arbeitenden Füllstandsmeßgerät wäre als Sende- und Empfangselement anstelle der Antenne ein Ultraschallsensor mit einem elektromechanischen Wandler, z.B. einem piezoelektrischen Element, vorzusehen.

Die Sendesignale S werden in Richtung des Füllguts 1 gesendet und an einer Füllgutoberfläche 7, aber auch am Behälter 3 und an im Behälter 3 befindlichen Störern 9 reflekiert. Die Überlagerung dieser Reflektionen bildet das Echosignal E.

Bei der Füllstandsmessung nach dem Laufzeitprinzip werden periodisch Sendesignale S, z.B. kurze Mikrowellen- oder Ultraschallpulse, in Richtung eines Füllgutes 1 ausgesendet. Es werden deren Echosignale E der Sendepulse S aufgenommen und einer Signalverarbeitung 13 zugeführt, die dazu dient aus den empfangenen Echosignalen E eine Echofunktion $A(t)$ abzuleiten, die Amplituden A des Echosignals E in Abhängigkeit von deren Laufzeit t enthält.

In Fig. 2 ist ein Beispiel einer solchen Echofunktion für die Anordnung von Fig. 1 dargestellt. Die Echofunktion weist drei ausgeprägte Maxima auf. Diese Maxima sind Echos L, S, B von denen das Echo L auf eine Reflektion an der Füllgutoberfläche, das Echo S auf eine Reflektion an dem Störer 9 und das Echo B auf eine Reflektion an einem Boden 15 des Behälters 3 zurückzuführen sind. Die Echos L, S, B treten nach Laufzeiten $t_L$, t , t auf, die einer Entfernung zwischen dem Sende- und Empfangselement 11 und der Füllgutoberfläche, bzw. dem Störer 9 und dem Boden 15 entsprechen.

Gemäß dem erfindungsgemäßen Verfahren zur Messung des Füllstandes des Füllgutes 1 in dem Behälter 3, sendet das nach dem Laufzeitprinzip arbeitende Füllstandsmeßgerät 5, periodisch Sendesignale S in Richtung des Füllgutes 1. Es werden Echosignale E der Sendesignale S aufgenommen und in die Echofunktion $A(t)$ umgewandelt.

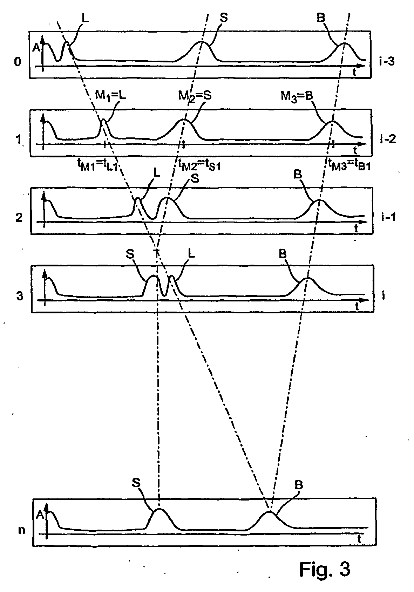

In Fig. 3 ist in den Abbildungen 1 bis n ein Beispiel für eine zeitliche Entwicklung von Echofunktionen $A(t)$ dargestellt. Das Beispiel stellt eine Abfolge dar, die auftritt, wenn sich ein anfänglich voller Behälter 3 stetig entleert. Abb. 0 entspricht dabei einem vollen Behälter 3 und Abb. n einem leeren Behälter 3.

Erfindungsgemäß wird in jedem Meßzyklus mindestens eine Echoeigenschaft der Echofunktion $A(t)$ bestimmt. Die Echoeigenschaften sind vorzugsweise Laufzeiten t , $t_S$, $t_B$ von Maxima der Echofunktion $A(t)$, denen ein bekannter Reflektor im Inneren des Behälters 3, insb. die Füllgutoberfläche, der Boden 15 des Behälters 3 oder ein fest eingebauter Störer, wie z.B. der Störer 9, zugeordnet werden kann.

Neben der Laufzeit eines Echos bilden dessen Amplitude, dessen Form, sowie dessen zeitlicher Verlauf weitere Echoeigenschaften, die im Rahmen des Verfahrens zur Zuordnung eines Echos zu einem Reflektor eingesetzt werden können.

Damit die Echos anhand der Echoeigenschaften zweifelsfrei einem bestimmten Reflektor zugeordnet werden können, wird bei einer Inbetriebnahme des Füllstandsmeßgeräts 5 zu Beginn des Verfahrens eine Initialisierung vorgenommen. Dabei werden die bei der Initialisierung vorliegenden Echoeigenschaften, hier $t_{L0}$, t , $t_{B0}$, einmal ermittelt und im Füllstandsmeßgerät 5 abgespeichert. Entsprechend wird auch bei anderen Echoeigenschaften, z.B. der Amplitude, der Form und/oder dem zeitlichen Verlauf der Echos, verfahren.

In dem in Fig. 3 dargestellten Beispiel entspricht die Abbildung 0 der Echofunktion $A(t)$, die bei der Inbetriebnahme aufgezeichnet wurde. Die Bestimmung der Echoeigenschaften der bei der Initialisierung aufgezeichneten Echofunktion $A(t)$ erfolgt beispielsweise indem der bei der Inbetriebnahme vorliegende Füllstand 7, sowie der Abstand des Bodens 15 des Behälter 3 vom Sende- und Empfangselement 11 und der Abstand des Störers 9 vom Sende- und Empfangselement 11 oder vom Boden 15 von einem Anwender vorgegeben werden.

Der Abstand des Bodens 15 des Behälter 3 vom Sende- und Empfangselement 11 und der Abstand des Störers 9 vom Sende- und Empfangselement 11 oder vom Boden 15 sind dem Anwender in der Regel bekannt und können z.B. über eine Kommunikationsschnittstelle 16 oder ein in den Figuren nicht dargestelltes Vorortdisplay eingespeist und in einem Speicher 17 abgelegt werden.

Der Füllstand kann sofern er bei der Inbetriebnahme nicht ohnehin bekannt ist z.B. durch Loten ermittelt werden. Alternativ kann der aktuelle Füllstand 7 auch durch eine eingangs beschriebene herkömmliche Füllstandsmessung mit dem Füllstandsmeßgerät 5 ermittelt werden. Bei letzterer Methode sind vorzugsweise hohe Sicherheitsansprüche an die Füllstandsmessung zu stellen. Dabei wird der gemessene Füllstand nur dann als aktueller Füllstand 7 abgespeichert, wenn das zugehörige Nutzecho zweifelsfrei identifiziert wurde. Als Bewertungskriterium für die zweifelsfreie Identifizierung eignet sich beispielsweise die Amplitude des Nutzechos. Übersteigt diese einen vorgegebenen Schwellwert und ist sie deutlich größer als Amplituden der Echofunktion in der Umgebung des Nutzechos, so kann davon ausgegangen werden, daß das richtige Echo als Nutzecho ermittelt wurde. Anhand der vorgegebenen Daten können die Echos L, S, B der Echofunktion A(t) eindeutig identifiziert werden und die Laufzeiten $t_{L0}$, $t_{S0}$, $t_{B0}$ der zugehörigen Maxima bestimmt und abgespeichert werden,

Der Füllstand 7 kann natürlich auch durch andere Verfahren ermittelt werden. So ist beispielsweise in der am 20. Dezember 2002 angemeldeten Deutschen Patentanmeldung mit der Anmeldenummer 10260962.4 ein Verfahren beschrieben, bei dem durch Aufzeichnung von Echofunktionen bei verschiedenen Füllstanden 7 eine Tabelle aufgestellt wird, anhand derer das vom Füllgut 1 stammende Echo eindeutig identifiziert werden kann.

Im Anschluß an diese Initialisierung kann der Messbetrieb aufgenommen werden. Die bei der Initialisierung ermittelten Echoeigenschaften stehen bei der ersten Messung als Echoeigenschaften der, der aktuellen Messung unmittelbar vorangegangenen Messung zur Verfügung.

Im Messbetrieb wird anhand der Echoeigenschaften mindestens einer vorherigen Messung eine Vorhersage für die bei der aktuellen Messung zu erwartenden Echoeigenschaften abgeleitet.

Dabei wird vorzugsweise anhand der Laufzeit mindestens eines Maximums einer vorangegangenen Messung eine Vorhersage für die bei der aktuellen Messung zu erwartende Laufzeit des entsprechenden Maximums getroffen.

Ensprechend wird bei Echoeigenschaften, wie z:B. Amplitude, Form und/oder zeitlicher Verlauf anhand der entsprechenden Daten mindestens einer vorangegangenen Messung eine Vorhersage für die bei der aktuellen Messung zu erwartenden Echoeigenschaften getroffen.

In dem in Fig. 3 dargestellten Beispiel wird bei der ersten auf die Initialisierung folgenden Messung folglich anhand der als Echoeigenschaften bei der Initialisierung ermittelten Laufzeiten $t_{L0}$, $t_{S0}$. $t_{B0}$ eine Vorhersage V für die bei der ersten Messung zu erwartenden Laufzeiten $T_{L1}$, $T_{S1}$, $T_{B1}$ der entsprechenden Maxima getroffen.

Im einfachsten Fall besteht die Vorhersage V darin, daß die zu erwartenden Laufzeiten $T_{L1}$, $T_{S1}$, $T_{B1}$ gleich den Laufzeiten der entsprechenden Maxima der unmittelbar vorangeganen Messung sind.
V:

$T_{L1}$: + $t_{L0}$
$T_{S1}$: + $t_{S0}$
$T_{S1}$: + $t_{S0}$

Dabei kann die Vorhersage V wie hier beschrieben auf der unmittelbar vorangegangen Messung beruhen. Alternativ kann aber auch eine weiter zurückliegende

Messung als Ausgangspunkt eingesetzt werden. Ebenso ist es möglich die Vorhersage V aus mehreren vorangegangenen Messungen abzuleiten. Die Vorhersage V für die zu erwartenden Laufzeiten $T_{Li}$, $T_{Si}$, $T_{Bi}$ kann z. B. gleich einem Mittelwert der Laufzeiten $t_L$, $t_S$, $t_B$ der entsprechenden Maxima mehrerer vorangegangener Messungen gesetzt werden.

Liegen die Echoeigenschaften von zwei der aktuellen Messung vorangehenden Messungen vor, kann die Vorhersage V für die Laufzeiten $T_{Li}$, $T_{Si}$, $T_{Bi}$ der Maxima ermittelt werden, indem anhand der letzten beiden vorangegangen Messungen für jede Laufzeit $T_{Li}$, $T_{Si}$, $T_{Bi}$ eine momentane Änderunsgeschwindigkeit $v(T_{Li})$, $v(\mathbf{T}_{Si})$, $v(T_{Bi})$ der Laufzeiten $T_{Li}$, $T_{Si}$, $T_{Bi}$ berechnet und die zu erwartenden Laufzeiten $T_{Li}$, $T_{Si}$, $T_{Bi}$ anhand dieser Geschwindigkeiten $v(T_{Li})$, $v(T_{Si})$, $v(T_{Bi})$ extrapoliert werden.

Dies wird nachfolgend beispielhaft anhand des in Fig. 3 dargestellten Ablaufs erläutert.

Sind aus der Initialisierung (Abb. 0) die Laufzeiten $t_{L0}$, $t_{S0}$, $t_{B0}$ und aus der ersten Messung (Abb. 1) die Laufzeiten $t_{L1}$, $t_{S1}$, $t_{B1}$ bekannt, so ergeben sich daraus die aktuellen Änderungsgeschwindigkeiten $v(T_{L2})$, $v(T_{S2})$, $v(T_{B2})$ mit

$$v(T_{L2}) := \frac{t_{L1} - t_{L0}}{\Delta t}$$

$$v(T_{S2}) := \frac{t_{S1} - t_{S0}}{\Delta t}$$

$$v(T_{B2}) := \frac{t_{B1} - t_{B0}}{\Delta t}$$

wobei $\Delta t$ ein zwischen zwei Messungen, hier der Initialisierung und der ersten Messung, verstrichenes Zeitintervall bezeichnet.

Die Extrapolation ergibt dann die folgende Vorhersage V: V:

$$T_{L2} := t_{L1} + v(T_{L2})\,\Delta t$$

$$T_{S2} := t_{S1} + v(T_{S2})\,\Delta t$$

$$T_{B2} := t_{B1} + v(T_{B2})\,\Delta t$$

wobei $\Delta t$ ein zwischen zwei Messungen, hier der ersten und der zweiten Messung, verstrichenes Zeitintervall bezeichnet.

Für die i-te Messung gilt analog: V:

$$T_{Li} := t_{L,i-1} + v(T_{Li})\,\Delta t$$

$$T_{Si} := t_{S,i-1} + v(T_{Si})\,\Delta t$$

$$T_{Bi} := t_{B,i-1} + v(T_{Bi})\,\Delta t$$

wobei $\Delta t$ ein zwischen zwei Messungen, hier der i-ten und der i-1-ten Messung, verstrichenes Zeitintervall bezeichnet.

Für die aktuellen Änderungsgeschwindigkeiten $v(T_{Li})$, $v(T_{Si})$, $v(T_{Bi})$ gilt analog

$$v(T_{Li}) := \frac{t_{L,i-1} - t_{L,i-2}}{\Delta t}$$

$$v(T_{Si}) := \frac{t_{S,i-1} - t_{S,i-2}}{\Delta t}$$

$$v(T_{Bi}) := \frac{t_{B,i-1} - t_{B,i-2}}{\Delta t}$$

Auch hier gilt analog, daß die beiden Messungen, auf denen die Vorhersage V beruht, der aktuellen Messung nicht unmittelbar vorangehen müssen. Auch müssen die beiden vorangegangenen Messungen nicht ummittelbar aufeinander folgen- Es genügt, wenn zwei beliebige vorangegange Messungen vorliegen und ein zwischen den beiden Messungen liegendes Zeitintervall bekannt ist.

Liegen Ergebnisse von mindestend drei vorangegangenen Messungen vor, so kann die Vorhersage V für Laufzeiten $T_{Li}$, $T_{Si}$, $T_{Bi}$ ermittelt werden, indem anhand der letzten drei vorangegangen Messungen eine momentane Beschleunigung $a(T_{Li})$, $a(T_{Si})$, $a(T_{Bi})$ und eine momentane Änderunsgeschwindigkeit $v(T_{Li})$, $v(T_{Si})$, $v(T_{Bi})$ der Laufzeiten berechnet und die zu erwartenden Laufzeiten $T_{Li}$, $T_{Si}$, $T_{Bi}$ anhand der Beschleunigungen $a(T_{Li})$, $a(T_{Si})$, $a(T_{Bi})$ und der Geschwindigkeiten $v(T_{Li})$, $v(T_{Si})$, $v(T_{Bi})$ extrapoliert werden,

Damit lautet die Vorhersage V wie folgt: V:

$$T_{Li} := t_{L,i-1} + v(T_{Li})\,\Delta t + \tfrac{1}{2}\,a(T_{Li})\,(\Delta t)^2$$

$$T_{Si} := t_{S,i-1} + v(T_{Si})\,\Delta t + \tfrac{1}{2}\,a(T_{Si})\,(\Delta t)^2$$

$$T_{Bi} := t_{B,i-1} + v(T_{Bi})\,\Delta t + \tfrac{1}{2}\,a(T_{Bi})\,(\Delta t)^2$$

wobei für die aktuellen Beschleunigungen $a(T_{Li})$, $a(T_{Si})$, $a(T_{Bi})$ gilt:

$$a(T_{Li}) := \frac{t_{L,i-1} - 2t_{L,i-2} + t_{L,i-3}}{(\Delta t)^2}$$

$$a(T_{Si}) := \frac{t_{S,i-1} - 2t_{S,i-2} + t_{S,i-3}}{(\Delta t)^2}$$

$$a(T_{Bi}) := \frac{t_{B,i-1} - 2t_{B,i-2} + t_{B,i-3}}{(\Delta t)^2}$$

Auch hier gilt analog, daß die drei Messungen, auf denen die Vorhersage V beruht, der aktuellen Messung nicht unmittelbar vorangehen müssen. Auch müssen die drei vorangegangenen Messungen nicht unmittelbar aufeinander folgen. Es genügt, wenn drei beliebige vorangegange Messungen vorliegen und die zwischen den Messungen liegenden Zeitintervalle bekannt sind.

Es ist allerdings in allen beschriebenen Fällen bei der Auswahl der vorangegangenen Messungen zu beachten, daß der Zeitraum zwischen den Messungen und der aktuellen Messung nicht zu groß wird. Maßstab ist hierfür eine Zeitskala auf der sich die Laufzelten, deren Änderungsgeschwindigkeiten und deren Beschleunigungen ändern.

Bei den beschriebenen Ausführungsbeispielen sind bis zu drei vorangegangene Messungen in die Vorhersagen einbezogen worden. Es können aber auch mehr vorangegangene Messungen einbezogen werden um die Vorhersagen abzuleiten.

Desweiteren kann auch noch die Beschleunigungsänderung und Modelle höherer Ordnungen zur Berechnung einbezogen werden, wenn genügend Meßdaten zur Vefügung stehen und die Art der Füllstandsänderung dies benötigt.

Anschließend werden die Echoeigenschaften der aktuellen Messung i, hier die Laufzeiten $t_{Li}$, $t_{Si}$, $t_{Bi}$, unter Einbeziehung der Vorhersagen V bestimmt. Für das angeführte Beispiel für die erste Messung bedeutet dies, daß die Maxima, hier M1, M2 und M3, und die zugehörigen Laufzeiten, hier $t_{M1}$, $t_{M2}$ und $t_{M3}$ der in Abb. 1 von Fig. 3 dargestellten Echofunktion A(t) der aktuellen Messung bestimmt werden. Die Laufzeiten werden mit den Laufzeiten der Vorhersagen verglichen. Der Vergleich erfolgt beispielsweise durch Differenzbildung, indem für jede zu erwartende Laufzeit $T_{L1}$, $T_{S1}$, $T_{B1}$ die Differenz zwischen jeder der Laufzeiten $t_{M1}$. $t_{M2}$ und $t_{M3}$ und der zu erwartenden Laufzeit $T_{L1}$, $T_{S1}$ bzw. $t_{B1}$ berechnet wird- Es wird für jede zu erwartende Laufzeit $T_{L1}$. $T_{S1}$, $T_{B1}$ diejenige Laufzeit $t_{M1}$. $t_{M2}$ oder $t_{M3}$ bestimmt, bel der die Differenz minimal ist.

Es können aber auch andere zum Vergleich geeignete Algorithmen eingesetzt werden. Ist z.B. die Form des Echos eine relevante Echöeigenschaft, so kann ein Formvergleich z.B. durch Minimierung der Summe aller Abstandsquadrate erfolgen.

Statt jede der Laufzeiten $t_{M1}$, $t_{M2}$ und $t_{M3}$ mit jeder zu erwartenden Laufzeit $T_{L1}$, $T_{S1}$ bzw. $T_{B1}$ zu vergleichen kann für jede zu erwartenden Laufzeit $T_{L1}$, $T_{S1}$ bzw. $T_{B1}$ ein Zeitfenster das die jeweilige zu erwartenden Laufzeit $T_{L1}$, $T_{S1}$ bzw $T_{B1}$ einschließt. Es genügt dann nur diejenigen der Laufzeiten $t_{M1}$, $t_{M2}$ und $t_{M3}$ mit der zugehörigen zu erwartenden Laufzeit zu vergleichen, die innerhalb des jeweiligen Zeitfensters liegen.

In dem dargestellten Beispiel weist die Laufzeit $t_{M1}$ die geringste Differenz zu der für das Nutzecho vorhergesagten Laufzeit T auf. Ist der Betrag der Differenz $T_{L1}$ - t geringer als ein vorgegebener Schwellwert, so wird das zugehörige Maximum M1 als Nutzecho L der aktuellen Messung erkannt. Entsprechend wird die zugehörige Laufzeit t als

Laufzeit $t_{L1}$ des Nutzechos L der aktuellen Messung erkannt und abgespeichert.

Auf die gleiche Weise werden alle weiteren Echoeigenschaften der aktuellen Messung bestimmt. Entsprechend wird das Maximum M2 als Echo S des Störers 9 und das Maximum M3 als Echo des Bodens 15 erkannt und die zugehörige Laufzeit t Laufzeit t des Echos S des Störers S und die Laufzeit t als Laufzeit t des Echos B des Bodens 15 der aktuellen Messung bewertet.

Auf analoge Weise wird in jedem Meßzyklus verfahren. Dabei kann die Vorhersage V ab der ersten Messung auf der Basis einer vorangegangenen Messung, ab der dritten Messung auf der Basis von drei vorangegangenen Messungen und berechnet werden.

Alternativ zu den beschriebenen Extrapolationsalgorithmen können anhand der aus den vorangengangen ermittelten Daten auch andere Verfahren für die Extrapolation der zu erwartenden Echoeigenschaften herangezogen werden. So kann beispielsweise anhand der aus den vorangegangenen Messungen bekannten zeitlichen Entwicklung eine Funktion bestimmt werden, die den zeitlichen Verlauf annähert. Die Funktion kann dabei flexibel an die aktuellen Gegebenheiten, die sich aus der Historie ergeben, angepaßt werden. Die Vorhersage V wird anhand der Funktion bestimmt.

Nachfolgen wird anhand der Echoeigenschaften der Füllstand bestimmt. Konnte beispielsweise in der i-ten Messung die Laufzeit $t_{Li}$ des Nutzechos L als Echoeigenschaft ermittelt werden, so ergibt sich daraus die Höhe $H_L$ des Füllstands 7 im Behälter 3 gemäß folgender Formel:

$$H_L(t_{Li}) = H - \tfrac{1}{2}(v\,t_{Li})$$

worin

H der Abstand zwischen dem Sende- und Empfangselement 11 und dem Boden des Behälters 3,
H die Höhe des Füllstandes 7, und L
v die Ausbreitungsgeschwindigkeit der Signale
bedeuten.

Konnte zusätzlich die Laufzeit $t_{Bi}$ des vom Boden 15 des Behälters 3 stammenden Echos als Echoeigenschaft ermittelt werden, so kann diese Echoeigenschaft ebenfalls zur Bestimmung der Höhe $H_L$ des Füllstandes 7 herangezogen werden. Diese ergibt sich gemäß der Formel:

$$H_L(t_{Bi}) := \frac{t_{Bi}\,v\,v_L - 2v_L H}{2(v - v_L)}$$

wobei

$t_{Bi}$ die Laufzeit des vom Boden 15 des Behälters 3 stammenden Echos B der aktuellen Messung,
H der Abstand zwischen dem Sende- und Empfangselement 11 und dem Boden des Behälters 3,
$H_L$ die Höhe des Füllstandes 7,
v die Ausbreitungsgeschwindigkeit der Signale im frelen Raum, und
$_{VL}$ die Ausbreitungsgeschwindigkeit der Signale im Füllgut bedeuten.

Die Ausbreitungsgeschwindigkeit $_{VL}$ der Signale im Füllgut kann, sofern sie nicht aufgrund der Kenntnis der physikalischen Eigenschaften des Fullguts bekannt ist, anhand einer vorherigen Messung, bei der der Behälter 15 zumindest teilweise befüllt war und sowohl das Nutzecho L als auch das vom Boden 15 des Behälters 3 stammende Echo B sowie deren Laufzeiten $t_L$ und $t_B$ identifiziert werden konnten gemäß folgender Formel berechnet werden:

$$v_L := \frac{2H - v\,t_L}{t_B - t_L}$$

wobei:

$t_B$ die Laufzeit des vom Boden 15 des Behälters 3 stammenden Echos B einer vorangegangenen Messung,
$t_L$ die Laufzeit des Nutzechos L einer vorangegangenen Messung,
H der Abstand zwischen dem Sende- und Empfangselement 11 und dem Boden des Behälters 3,
v die AusbreitungsgescHwiridigkeit der Signale im freien Raum, und
$v_L$ die Ausbreitungsgeschwiridigkeirr der Signale im Füllgut bedeuten.

Sofern sich die Ausbreitungsgeschwindigkeit $V_L$ der Signale im Füllgut 1 nicht ändert, genügt es diese einmal zu berechnen. Im dargestellten Ausführungsbeispiel kann dies beispielsweise unmittelbar anhand der bei der Initialisierung ermittelten Echoeigenschaften erfolgen. Daraus ergibt sich die Ausbreitungsgeschwindigkeit $V_L$ gemäß obiger Formel zu:

$$v_L := \frac{2H - v t_{L0}}{t_{B0} - t_{L0}}$$

Können Änderungen der Ausbreitungsgeschwindigkeit $v_L$ auftreten, so muß dies Größe regelmäßig bestimmt werden. Solche Änderungen sind zu erwarten, wenn sich die physikalischen Eigenschaften, wie z.B. Dichte, Material oder Dielektrizitätskonstante, des Füllguts 1 ändern können.

Zusätzlich kann die Laufzeit $t_{Si}$ des vom Störer 9 stammenden Echos als Echoeigenschaft ermittelt werden. Diese Echoeigenschaft eignet sich immer dann zur Bestimmung der Höhe $H_L$ des Füllstandes 7, wenn der Füllstand 7 oberhalb des Störers 9 liegt. Ob dies der Fall ist, kann anhand der in der vorherigen Messung bestimmten Höhe $H_L$ des Füllstandes 7 und einer vorgegebenen maximal möglichen Änderungsgeschwindigkeit $V_{max}$ des Füllstandes 7 bestimmt werden. Die maximal mögliche Änderungs-geschwindigkeit $V_{max}$ des Füllstandes 7 ist anwendungsspezifisch und muß entweder vom Anwender im Rahmen der Initialisierung angegeben und im Füllstandsmeßgerät 5 abgespeichert werden, oder ermittelt werden.

Gilt für die vorangegangene Messung

$$H_S < H_L - v_{max} \Delta t$$

wobei

$H_S$ die Höhe des Störers 9 im Behälter 3,
$H_L$ die Höhe des in der vorangegangenen Messung bestimmten Füllstandes,
$V_{max}$ die vorgegebene maximal mögliche Änderungsgeschwindigkeit des Füllstandes 7, und
$\Delta t$ das zwischen der vorangegangenen und der aktuellen Messung liegende Zeitintervall bedeuten.
so kann anhand der als Echoeigenschaft der aktuellen Messung bestimmten Laufzeit $t_{S1}$ des vom Störer 9 stammenden Echos S die Höhe $H_L$ des aktuellen Füllstands 7 gemäß folgender Beziehung berechnet werden:

$$H_L(t_{Si}) := \frac{v v_L t_{Si} + 2 v H_S - 2 v_L H}{2(v - v_L)}$$

Bei allen anderen Füllständen 7, bei denen sich die Höhe $H_L$ des Füllstandes 7 zwischen dem Störer 9 und dem Boden 15 des Behälters 3 befindet, weist die Laufzeit $t_S$ des vom Störer 9 erzeugten Echos S einen konstanten Wert auf und kann nicht zur Füllstandsbestimmung herangezogen werden. Sie eignet sich jedoch zur Überprüfung der Meßgenauigkeit und der Plausibilität der erzielten Meßergebnisse.

Bei dem Verfahren in seiner einfachsten Form wird lediglich eine einzige Echoeigenschaft der Echofunktion herangezogen. Die Eigenschaft ist die Laufzeit t des Nutzechos L oder die Laufzeit t des vom Boden 15 stammenden Echos B. In jedem Meßzyklus wird anhand der entsprechenden Echoeigenschaft mindestens einer vorherigen Messung auf die oben beschriebene Weise eine Vorhersage V für die bei der aktuellen Messung zu erwartenden Echoeigenschaft abgeleitet. Anschließend wird die Echoeigenschaft der aktuellen Messung unter Einbeziehung der Vorhersage V bestimmt, und anhand der Echoeigenschaft wie oben erläutert der aktuelle Füllstand bestimmt, indem anhand mindestens einer vorangegangenen Messung die bei der aktuellen Messung zu erwartende Laufzeit $T_{Li}$ des an der Füllgutoberfläche reflektierten Nutzechos L bestimmt wird, dasjenige Maximum der aktuellen Echofunktion bestimmt wird, dessen Laufzeit die geringste Abweichung zu der vorhergesagten Laufzeit des an der Füllgutoberfläche reflektierten Nutzechos aufweist, und anhand der Laufzeit dieses Maximum wie oben erläutert der aktuelle Füllstand bestimmt wird.

Kann die Echoeigenschaft der aktuellen Messung nicht bestimmt werden, z.B. weil ein Rührer vorübergehend in den Signalweg ragt, so kann die Vorhersage V an die Stelle der aktuellen Echoeigenschaft gesetzt werden. Der aktuelle Füllstand wird gleich dem sich aus der Vorhersage V ergebenden Füllstand 7 gesetzt. Für die nachfolgende Messung tritt die Vorhersage V an die Stelle der aus der vorangehenden Messung bekannten Echoeigenschaft.

Kann die Echoeigenschaft in einer vorgegebenen Anzahl aufeinander folgende Messungen nicht bestimmt werden, so wird vorzugsweise ein Alarm ausgelöst und das Verfahren erneut gestartet, wobei die eingangs beschriebene Initialisierung erneut durchzuführen ist.

Vorzugsweise wird bei dem erfindungsgemäßen Verfahren mindestens eine weitere Echoeigenschaft der Echofunktion herangezogen. Beispielsweise können die Echoeigenschaften: Laufzeit t des Nutzechos L und Laufzeit t des vom Boden 15 stammenden Echos B herangezogen werden. In jedem Meßzyklus wird anhand der entsprechenden Echoeigenschaften mindestens einer vorherigen Messung auf die oben beschriebene Weise eine Vorhersage V für die bei der aktuelle Messung zu erwartenden Echoeigenschaften abgeleitet. Anschließend werden die Echoeigenschaften der aktuellen Messung unter Einbeziehung der Vorhersage V bestimmt. Hier läßt sich anhand jeder der einbezogenen Echoeigenschaften wie oben erläutert der aktuelle Füllstand bestimmen.

Der aktuelle Füllstand kann wahlweise gleich dem anhand der Echoeigenschaft Laufzeit t des Nutzechos L oder Laufzeit t des vom Boden 15 stammenden Echos B L B bestimmten Füllstandes gesetzt werden.

Können beide Echoeigenschaften bestimmt werden, kann eingestellt werden, welcher Echoeigenschaft zur Bestimmung des Füllstands 7 der Vorzug gegeben werden soll. Die Auswahl kann auch in Abhängigkeit von der Höhe des aktuellen Füllstands 7 getroffen werden.

Kann eine der Echoeigenschaften der aktuellen Messung nicht bestimmt werden, so wird der Füllstand 7 anhand der übrigen bestimmbaren Echoeigenschaften bestimmt werden. Der aktuelle Füllstand wird gleich dem sich aus den ermittelten Echoeigenschaften ergebenden ergebenden Füllstand 7 gesetzt.

Für die dieser aktuellen Messung nachfolgende Messung treten die Ergebnisse der Vorhersage V an die Stelle der nicht ermittelten Echoeigenschaften. Für die nachfolgende Messung werden sie als aus der vorangehenden Messung bekannte Echoeigenschaft angesetzt.

Kann beispielsweise bei einer aktuellen Messung i nur die Laufzeit t des vom Boden 15 stammenden Echos B als Echoeigenschaft der aktuellen Mesung bestimmt werden, indem anhand mindestens einer vorangegangenen Messung die bei der aktuellen Messung zu erwartende Laufzeit T des am Boden 15 des Behälters 3 reflektierten Echos bestimmt wird, und dasjenige Maximum der aktuellen Echofunktion bestimmt wird, dessen Laufzeit die geringste Abweichung zu der vorhergesagten Laufzeit T des am Boden 15 des Behälters 3 reflektierten Echos aufweist, so wird unter Einbeziehung der Laufzeit t dieses Maximum der aktuelle Füllstand 7 bestimmt.

Dies kann unmittelbar unter Verwendung der oben angegebenen Formel für die Berechnung der Höhe H des Füllstandes 7 als Funktion Laufzeit t erfolgen.

Weiter kann anhand der Laufzeit t des aktuellen am Boden 15 reflektierten Echos Bi B ein Schätzwert $T_{LX}(t_{Bi})$ für die Laufzeit des aktuellen Nutzechos L berechnet werden.

Der Schätzwert $T_{LX}(t_{Bi})$ entspricht derjenigen Laufzeit des Nutzechos, die beidem anhand der Laufzeit t des aktuellen am Boden 15 reflektierten Echos B bestimmten Höhe $H_L$ des Füllstandes zu erwarten ist:

$$T_{LX}(t_{Bi}) := \frac{H - H_L(t_{Bi})}{v}$$

Dieser Schätzwert $T_{LX}(t_{Bi})$ tritt an die Stelle der Vorhersage V für die zu erwartende Lauftzeit $T_{Li}$ des Nutzechos L. Es wird dasjenige Maximum der aktuellen Echofunktion bestimmt wird, dessen Laufzeit die geringste Abweichung zu dem Schätzwert $T_{LX}(t_{Bi})$ aufweist, und anhand der Laufzeit dieses Maximums der aktuelle Füllstand bestimmt.

Kann keine der Echoeigenschaft der aktuellen Messung bestimmt werden, z.B. weil das Sende- und Empfangselement 11 vorübergehend verdeckt ist, so kann die Vorhersage V an die Stelle der aktuellen Echoeigenschaften gesetzt werden. Der aktuelle Füllstand wird gleich dem sich aus der Vorhersage V ergebenden Füllstand 7 gesetzt. Für die nachfolgende Messung tritt die Vorhersage V an die Stelle der aus der vorangehenden Messung bekannten Echoeigenschaften,

Kann keine der Echoeigenschaften in einer vorgegebenen Anzahl aufeinander folgender Messungen bestimmt werden, so wird vorzugsweise ein Alarm ausgelöst und das Verfahren erneut gestartet, wobei die eingangs beschriebene Initialisierung erneut durchzuführen ist.

Vorzugsweise werden die Meßergebnisse fortlaufend auf deren Plausibilität hin überprüft. Zur Plausibilitätskontrolle eignet sich besonders der Vergleich der in Abhängigkeit von den verschiedenen Echoeigenschaften bestimmten Höhen $H_L$ des Füllstandes $H_L(t_{Li})$, $H_L(t_{Bi})$. Liegt der Füllstand 7 oberhalb des Störers 9 kann auch die Höhe $H_L(t_{Si})$ als Funktion der Laufzeit $t_{Si}$ des vom Störer 9 stammenden Echos S herangezogen werden. Liegt der Füllstand 7 unterhalb des Störers 9 kann die Laufzeit $t_{Si}$ anhand der bei der Initialierung aufgenommenen Daten auf deren Richtigkeit überprüft werden. Daraus ergibt sich eine Kontrollmöglichkeit für die Meßgenauigkeit. Ebenso kann eine Plausibilitätskontrolle vorgenommen werden. Ergibt die Laufzeit $t_{Si}$ des vom Störer 9 stammenden Echos S der aktuellen Messung, daß der Störer 9 nicht vom Füllgut 1 überdeckt ist, so muß die Höhe $H_L$ des Füllstandes 7 unterhalb der Einbauhöhe $H_s$ des

Störers 9 liegen. Ist dies nicht der Fall, so kann als Ergebnis dieser Plausibilitätskontrolle z.B. eine Fehlermeldung und/oder ein Alarm ausgelöst werden.

In der Internationalen Patentanmeldung mit der Anmeldenummer WO/EP02/08368, die von der Anmelderin am 26.07.2002 eingereicht wurde, ist eine Vielzahl von physikalischen Zusammenhängen beschrieben, die bei der Füllstandsmessung auftreten können. Es ist dort angegeben, wie unter Ausnutzung der Kenntnis dieser Zusammenhänge der Füllstand bestimmt werden kann. Diese Zusammenhänge, sowie die daraus abgeleiteten Füllstandsbestimmungen können bei dem hier beschriebenen erfindungsgemäßen Verfahren zur Plausibilitätskontrolle herangezogen werden.

Bei Bedarf können ausgewählte Echoeigenschaften ergänzt, ersetzt oder gestrichen werden.

Das beschriebene Verfahren kann als eigenständiges Meßverfahren eingesetzt werden, es kann aber auch parallel zu einem herkömmlichen Meßverfahren eingesetzt werden.

Es ermöglicht eine erhöhte Meßsicherheit, da der Füllstand 7 nicht nur anhand der aktuellen Messung bestimmt wird, sondern dessen historischer Verlauf mit einbezogen wird. Diese Form der Echoverfolgung liefert auch dann noch zuverlässige Messergebnisse, wenn das Nutzecho kurzzeitig nicht gefunden werden kann. Zuverlässigen Messungen sind anhand der Verfahrens auch dann noch möglich, wenn kurzzeitig Elemente, z.B. Rührer, in den Signalweg hineinragen, oder Umstände auftreten, die zu einer Verschlechterung der Echoqualität, z.B. einem geringen Signal-Rausch Abstand, führen.

**Patentansprüche**

1.  Verfahren zur Messung eines zeitlich veränderlichen Füllstandes (7) eines Füllgutes (1) in einem Behälter (3), mit einem nach dem Laufzeitprinzip arbeitenden Füllstandsmeßgerät (5), bei dem

    - periodisch Sendesignale (S) in Richtung des Füllgutes (1) gesendet werden,
    - deren Echosignale (E) aufgenommen und in eine deren Amplituden (A) in Abhängigkeit von deren Laufzeit (t) wiedergebende Echofunktion (A(t)) umgewandelt werden,
    - zeitlich aufeinander folgende Messungen ausgeführt werden, bei denen jeweils mindestens eine Echoeigenschaft der Echofunktion (A(t)), nämlich eine Laufzeit ($t_L$, $t_S$, $t_B$) eines auf eine Reflektion an einem bekannten Reflektor zurück zu führenden Maximums (L, S, B) der Echofunktion (A(t)), bestimmt wird, wobei die bekannten Reflektoren eine Füllgutoberfläche und/oder einen Boden (15) des Behälters (3) umfassen, indem

        -- anhand der entsprechenden in den letzten beiden vorangegangenen Messungen bestimmten Echoeigenschaften eine Vorhersage (V) für die jeweilige bei der aktuellen Messung zu erwartende Echoeigenschaft abgeleitet wird, indem eine momentane Änderunsgeschwindigkeit $v(T_L)$, $v(T_S)$, $v(T_B)$ der Laufzeiten berechnet und die zu erwartende Laufzeit ($T_L$, $T_S$, $T_B$) anhand dieser Geschwindigkeit $v(T_L)$, $v(T_S)$, $v(T_B)$ extrapoliert wird,
        -- die Echoeigenschaften der aktuellen Messung unter Einbeziehung der Vorhersagen (V) bestimmt werden, und
        -- Anhand der Echoeigenschaften der aktuellen Messung der aktuelle Füllstand (7) bestimmt wird.

2.  Verfahren zur Messung eines Füllstandes (7) eines Füllgutes (1) in einem Behälter (3) nach Anspruch 1, bei dem die Vorhersage (V) für die Laufzeiten ($T_L$, $T_S$, $T_B$) der Maxima ermittelt wird, indem anhand von mindestens drei vorangegangene Messungen eine momentane Beschleunigung $a(T_L)$, $a(T_S)$, $a(T_B)$ und eine momentane Geschwindigkeit $v(T_L)$, $v(T_S)$, $v(T_B)$ der Laufzeiten berechnet und die zu erwartende Laufzeit ($T_L$, $T_S$, $T_B$) anhand der Beschleunigung $a(T_L)$, $a(T_S)$, $a(T_B)$ und der Geschwindigkeit $v(T_L)$, $v(T_S)$, $v(T_B)$ extrapoliert wird.

3.  Verfahren zur Messung eines Füllstandes (7) eines Füllgutes (1) in einem Behälter (3) nach einem der vorangehenden Ansprüche, bei dem

    - eine Echoeigenschaft die Laufzeit ($t_L$) des an der Füllgutoberfläche reflektierten Nutzechos (L) ist,
    - anhand mindestens einer vorangegangenen Messung die bei der aktuellen Messung zu erwartende Laufzeit ($T_L$) des an der Füllgutoberfläche reflektierten Nutzechos (L) bestimmt wird,
    - dasjenige Maximum (M) der aktuellen Echofunktion (A(t)) bestimmt wird, dessen Laufzeit ($t_M$) die geringste Abweichung zu der vorhergesagten Laufzeit ($T_L$) des an der Füllgutoberfläche reflektierten Nutzechos (L) aufweist, und
    - anhand der Laufzeit ($t_M$) dieses Maximum der aktuelle Füllstand (7) bestimmt wird.

4.  Verfahren zur Messung eines Füllstandes (7) eines Füllgutes (1) in einem Behälter (3) nach einem der vorangehenden Ansprüche,- bei dem

- eine Echoeigenschaft die Laufzeit ($t_B$) des am Boden (15) des Behälters (3) reflektierten Echos (B) ist,
- anhand mindestens einer vorangegangenen Messung die bei der aktuellen Messung zu erwartende Laufzeit ($T_B$) des am Boden (15) des Behälters (3) reflektierten Echos (B) bestimmt wird,
- dasjenige Maximum (M) der aktuellen Echofunktion (A(t)) bestimmt wird, dessen Laufzeit ($t_M$) die geringste Abweichung zu der vorhergesagten Laufzeit ($T_B$) des am Boden (15) des Behälters (3) reflektierten Echos (B) aufweist, und
- unter Einbeziehung der Laufzeit ($t_M$) dieses Maximums (M) der aktuelle Füllstand (7) bestimmt wird.

5. Verfahren zur Messung eines Füllstandes (7) eines Füllgutes (1) in einem Behälter (3) nach Anspruch 4, bei dem

- aus der Laufzeit ($t_B$) des aktuellen am Boden (15) reflektierten Echos (B) ein Schätzwert ($T_{LX}$) für die Laufzeit ($T_L$) des aktuellen Nutzechos (L) berechnet wird,
- dasjenige Maximum (M) der aktuellen Echofunktion (A(t)) bestimmt wird, dessen Laufzeit ($t_M$) die geringste Abweichung zu dem Schätzwert ($T_{LX}$) aufweist, und
- anhand der Laufzeit ($t_M$) dieses Maximum (M) der aktuelle Füllstand (7) bestimmt wird.

6. Verfahren zur Messung eines Füllstandes (7) eines Füllgutes (1) in einem. Behälter (3) nach einem der vorangehenden Ansprüche, bei dem die Meßergebnisse fortlaufend auf deren Plausibilität hin überprüft werden.

**Claims**

1. Procedure for measuring a level (7) of a product (1) in a vessel (3), said level varying over time, with a level transmitter (5) that works according to the time of flight principle, wherein

- transmission signals (S) are sent periodically in the direction of the product (1),
- their echo signals (E) are recorded and converted into an echo function (A(t)) that reflects their amplitudes (A) depending on their time of flight (t),
- successive measurements are carried out wherein at least one echo property of the echo function (A(t)) is determined during each measurement, specifically a time of flight ($t_L$, $t_S$, $t_B$) of a maximum (L, S, B) of the echo function (A(t)) which is attributable to a reflection at a known reflector, wherein the known reflectors comprise a product surface and/or a floor (15) of the vessel (3), in that

-- on the basis of the echo properties determined in the last two previous measurements, it is possible to make a forecast (V) for the echo property to be expected in the current measurement by calculating a current change in the velocity $v(T_L)$, $v(T_S)$, $v(T_B)$ of the times of flight and extrapolating the expected time of flight ($T_L$, $T_S$, $T_B$) on the basis of this velocity $v(T_L)$, $v(T_S)$, $v(T_B)$,
-- the echo properties of the current measurement are determined taking the forecasts (V) into account, and
-- the current level (7) is determined on the basis of the echo properties of the current measurement.

2. Procedure for measuring a level (7) of a product (1) in a vessel (3) as claimed in Claim 1, wherein the forecast (V) is determined for the times of flight ($T_L$, $T_S$, $T_B$) of the maximum by calculating a current acceleration $a(T_L)$, $a(T_S)$, $a(T_B)$ and a current velocity $v(T_L)$, $v(T_S)$, $v(T_B)$ of the times of flight using at least three prior measurements and by extrapolating the expected time of flight ($T_L$, $T_S$, $T_B$) using the acceleration $a(T_L)$, $a(T_S)$, $a(T_B)$ and the velocity $v(T_L)$, $v(T_S)$, $v(T_B)$.

3. Procedure for measuring a level (7) of a product (1) in a vessel (3) as claimed in one of the previous claims, wherein

- an echo property is the time of flight ($t_L$) of the useful echo (L) reflected at the product surface,
- the time of flight ($T_L$) of the useful echo (L) reflected at the product surface, to be expected in the current measurement, is determined using at least one previous measurement,
- the maximum (M) of the current echo function (A(t)) is determined whose time of flight ($t_M$) deviates the least from the forecast time of flight ($T_L$) of the useful echo (L) reflected at the product surface and wherein
- the current level (7) is determined based on the time of flight ($t_M$) of this maximum.

4. Procedure for measuring a level (7) of a product (1) in a vessel (3) as claimed in one of the previous claims, wherein

- an echo property is the time of flight ($t_B$) of the echo (B) reflected at the floor (15) of the vessel (3),
- the time of flight ($T_L$) of the echo (B) reflected at the floor (15) of the vessel (3), to be expected in the current measurement, is determined using at least one previous measurement,
- the maximum (M) of the current echo function (A(t)) is determined whose time of flight ($t_M$) deviates the least from the forecasted time of flight ($T_B$) of the echo (B) reflected at the floor (15) of the vessel (3) and wherein
- the current level (7) is determined taking the time of flight ($t_M$) of this maximum (M) into account.

**5.** Procedure for measuring a level (7) of a product (1) in a vessel (3) as claimed in Claim 4, wherein

- an estimated value ($T_{LX}$) for the time of flight ($T_L$) of the current useful echo (L) is calculated from the time of flight ($t_B$) of the echo (B) currently reflected on the floor (15),
- the maximum (M) of the current echo function (A(t)) is determined whose time of flight ($t_M$) deviates the least from the estimated value ($T_{LX}$), and wherein
- the current level (7) is determined using the time of flight ($t_M$) of this maximum (M).

**6.** Procedure for measuring a level (7) of a product (1) in a vessel (3) as claimed in one of the previous claims, wherein the plausibility of the measurement results is continuously checked.


**Revendications**

**1.** Procédé destiné à la mesure d'un niveau de remplissage (7) variable dans le temps d'un produit (1) dans un réservoir (3), avec un transmetteur de niveau (5) fonctionnant selon le principe du temps de propagation, pour lequel

- des signaux d'émission périodiques (S) sont émis en direction du produit (1),
- dont les signaux d'écho (E) sont enregistrés et convertis en une fonction d'écho (A(t)) reflétant leurs amplitudes (A) en fonction de leur temps de propagation (t),
- sont exécutées des mesures successives dans le temps, pour lesquelles est déterminée respectivement au moins une caractéristique de la fonction d'écho (A(t)), notamment un temps de propagation ($t_L$, $t_S$, $t_B$) d'un maximum (L, S, B) de la fonction d'écho (A(t)) attribué à une réflexion sur un réflecteur connu, les réflecteurs connus incluant une surface du produit et/ou un fond (15) du réservoir (3), en ce que

  -- une prévision (V) est dérivée pour la caractéristique d'écho attendue lors de la mesure actuelle, au moyen des caractéristiques d'écho déterminées dans les deux dernières mesures précédentes, en ce qu'est calculée une vitesse de changement momentanée $v(T_L)$, $v(T_S)$, $v(T_B)$ des temps de propagation et en ce que le temps de propagation ($T_L$, $T_S$, $T_B$) attendu est extrapolé au moyen de cette vitesse $v(T_L)$, $v(T_S)$, $v(T_B)$,
  -- les caractéristiques d'écho de la mesure actuelle sont déterminées en prenant en compte les prévisions (V), et
  -- le niveau de remplissage (7) actuel est déterminé au moyen des caractéristiques d'écho de la mesure actuelle.

**2.** Procédé destiné à la mesure d'un niveau de remplissage (7) d'un produit (1) dans un réservoir (3) selon la revendication 1, pour lequel la prévision (V) pour les temps de propagation ($T_L$, $T_S$, $T_B$) des maximum est déterminée en ce qu'est calculée, au moyen d'au moins trois mesures précédentes, une accélération momentanée $a(T_L)$, $a(T_S)$, $a(T_B)$ et une vitesse momentanée $v(T_L)$, $v(T_S)$, $v(T_B)$ des temps de propagation, et en ce que le temps de propagation ($T_L$, $T_S$, $T_B$) attendu est extrapolé au moyen de l'accélération $a(T_L)$, $a(T_S)$, $a(T_B)$ et de la vitesse $v(T_L)$, $v(T_S)$, $v(T_B)$.

**3.** Procédé destiné à la mesure d'un niveau de remplissage (7) d'un produit (1) dans un réservoir (3) selon l'une des revendications précédentes, pour lequel

- une caractéristique d'écho est le temps de propagation ($t_L$) de l'écho utile (L) réfléchi à la surface du produit,
- est déterminé, au moyen d'au moins une mesure précédente, le temps de propagation ($T_L$) prévisible pour la mesure actuelle de l'écho utile (L) réfléchi à la surface du produit,
- est déterminé le maximum (M) de la fonction d'écho (A(t)) actuelle, dont le temps de propagation ($t_M$) présente l'écart le plus faible par rapport au temps de propagation ($T_L$) prévu de l'écho utile (L) réfléchi à la surface du produit, et pour lequel
- le niveau de remplissage (7) actuel est déterminé au moyen du temps de propagation ($t_M$) de ce maximum.

**4.** Procédé destiné à la mesure d'un niveau de remplissage (7) d'un produit (1) dans un réservoir (3) selon l'une des revendications précédentes, pour lequel

- une caractéristique d'écho est le temps de propagation ($t_B$) de l'écho (B) réfléchi au fond (15) du réservoir (3),
- est déterminé, au moyen d'au moins une mesure précédente, le temps de propagation ($T_B$) visible pour la mesure actuelle de l'écho (B) réfléchi au fond (15) du réservoir (3),
- est déterminé le maximum (M) de la fonction d'écho (A(t)) actuelle, dont le temps de propagation ($t_M$) présente l'écart le plus faible par rapport à la valeur estimative ($T_B$) de l'écho (B) réfléchi au fond (15) du réservoir (3), et
- est déterminé le niveau de remplissage (7) actuel en prenant en compte le temps de propagation ($t_M$) de ce maximum (M).

**5.** Procédé destiné à la mesure d'un niveau de remplissage (7) d'un produit (1) dans un réservoir (3) selon la revendication 4, pour lequel

- est calculé, à partir du temps de propagation ($t_B$) de l'écho (B) actuel réfléchi au fond (15), une valeur estimative ($T_{LX}$) pour le temps de propagation ($T_L$) de l'écho utile (L) actuel,
- est déterminé le maximum (M) de la fonction d'écho (A(t)) actuelle, dont le temps de propagation ($t_M$) présente l'écart le plus faible par rapport à la valeur estimative ($T_{LX}$), et pour lequel
- est déterminé le niveau de remplissage (7) actuel au moyen du temps de propagation ($t_M$) de ce maximum (M).

**6.** Procédé destiné à la mesure d'un niveau de remplissage (7) d'un produit (1) dans un réservoir (3) selon l'une des revendications précédentes, pour lequel les résultats de mesure sont vérifiés continuellement par rapport à leur plausibilité.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5587969 A
- DE 10260962
- EP 0208368 A